Europäisches Patentamt

European Patent Office

Office européen des brevets

(19)

(11) Veröffentlichungsnummer : **0 037 046**
**B1**

(12) **EUROPÄISCHE PATENTSCHRIFT**

(45) Veröffentlichungstag der Patentschrift :
04.07.84

(21) Anmeldenummer : **81102158.3**

(22) Anmeldetag : **23.03.81**

(51) Int. Cl.³ : **F 24 C 15/36**, F 23 D 13/12

(54) **Strahlungsbrenner.**

(30) Priorität : **01.04.80 DE 3012588**

(43) Veröffentlichungstag der Anmeldung :
**07.10.81 Patentblatt 81/40**

(45) Bekanntmachung des Hinweises auf die Patenterteilung : **04.07.84 Patentblatt 84/27**

(84) Benannte Vertragsstaaten :
**AT BE FR GB NL**

(56) Entgegenhaltungen :
**CH-A-   359 861**
**DE-A- 1 551 770**
**US-A- 2 622 586**
**US-A- 3 434 466**

(73) Patentinhaber : **Schwank GmbH**
**Bremerhavener Strasse 43**
**D-5000 Köln 60 (DE)**

(72) Erfinder : **Schwank, Bernd Hinrich**
**Marienburger Strasse 52**
**D-5000 Köln 51 (DE)**

(74) Vertreter : **Köhne, Friedrich, Dipl.-Ing.**
**Postfach 250265 Lothringer Strasse 81**
**D-5000 Köln 1 (DE)**

## Beschreibung

Die Erfindung bezieht sich auf einen Strahlungsbrenner, insbesondere für gasförmigen Brennstoff, mit einem einseitig offenen Gehäuse zur Aufbereitung eines Brennstoff-Luft-Gemisches sowie mit einer an der offenen Gehäuseseite angeordneten, zahlreiche Verbrennungskanäle aufweisenden Brennerplatte, ferner mit einer Vorrichtung zum Zuführen von Brennstoff und Luft und mit einem im Abstand von der Brennerplatte an der offenen Gehäuseseite vorgesetzten, trichterartigen Gehäuseteil, wobei die Vorrichtung zum Zuführen von Brennstoff und Luft eine an eine Brennstoffleitung angeschlossene Injektordüse sowie ein Mischrohr aufweist, das mit dem einen Ende der Injektordüse benachbart ist und in das Gehäuse hineinragt, wobei ferner mit Abstand von der Brennerplatte in dem trichterförmigen Gehäuseteil eine am Rande gehaltene hitzebeständige Glaskeramikplatte angeordnet ist und auf der Abstrahlungsseite der Brennerplatte ein diese vollständig überdeckendes Windschutzgitter angeordnet ist, und wobei schließlich am Rande des Austrittendes des trichterförmigen Gehäuseteils ein weiteres Windschutzgitter befestigt ist.

Brenner der vorerläuterten Gattung werden in vielen Bereichen der Technik angewendet, und zwar als Heizgeräte. Ein großes Einsatzgebiet ist das der Beheizung von Räumen u. dgl. Solange die Brenner in geschlossenen bzw. windgeschützten Räumen installiert sind, haben sie sich ausgezeichnet in der Praxis bewährt. In vielen Fällen müssen die Brenner jedoch in großen Werkshallen zur Strahlungsbeheizung von Arbeitsplätzen oder beispielsweise über den Zuschauerplätzen auf Sportstadien installiert werden. In diesen Fällen und bei vielen anderen Anwendungsgebieten sind die Brenner mehr oder weniger starkem Wind oder Sturm ausgesetzt.

Der Einfluß von Wind oder Sturm auf den Brenner ist außerordentlich störend, nicht nur, weil die heißen aus der Brennerplatte austretenden Abgase ungenutzt weggetragen werden, sondern auch, weil die Strahlungsseite der Brennerplatte durch den Wind, wenn auch nur ständig stellenweise wechselnd, abgekühlt wird, so daß auf der Ausstrahlungsseite der Brennerplatte nicht ständig diejenige Temperatur eingehalten wird, die für eine optimale Energienutzung und Strahlungswirkung erforderlich ist.

Ein Strahlungsbrenner der anfangs erläuterten Gattung ist bereits aus der US-A-34 34 466 bekannt.

Hierin ist bereits der Grundgedanke offenbart, Windschutzvorrichtungen sowohl im Zuführungsbereich als auch auf der Strahlungsseite vorzusehen. Dazu sind im Oberteil des Brennergehäuses zwei gleich große dicht nebeneinander verlaufende Schlitze vorgesehen, die je mit einer Haube überdeckt sind. Der eine Schlitz dient der Zuführung der Verbrennungsluft, während der andere Schlitz die verbrannten Abgase entweichen läßt. Dabei soll und kann der Eintritt von Wind durch die besagten Öffnungen nicht vermindert oder vermieden werden, vielmehr soll durch die besondere Anordnung dieser Öffnungen ein Druckausgleich geschaffen werden. Tatsächlich entsteht aber kein Druckausgleich, vielmehr wirkt sich der einfallende Wind auf die nebeneinander stehenden Ein- und Auslässe gleich aus, indem sich der Winddruck sowohl auf der Gaszuführungsseite, als auch auf der Abgasströmseite der Brennerseite aufbaut. So bildet sich zum Beispiel aufgrund des Abgasschachtes ein Abgasstau aus, der sich auf die Verbrennungsvorgänge und die Abstrahlung der Brennerplatte sehr schädlich auswirkt. Es kommt hinzu, daß die zugeführte Verbrennungsluft von dem Eintrittsschlitz erst einen Einsatz umspülen muß, um dann durch eine verhältnismäßig kleine Öffnung eingangs des Mischrohres einzutreten, wonach dann erst die Gemischaufbereitung und der Eintritt in die Brennerplatte erfolgt. Dadurch wird sich die Wirkung von störrischem Wind und auf dieser Seite wesentlich langsamer und unvollständiger auswirken. Dabei ist noch zu berücksichtigen, daß die Volumina von Verbrennungsluft einerseits und Abgasen andererseits und damit auch die Ein- und Austrittsgeschwindigkeiten recht unterschiedlich sind.

Ein weiterer Strahlungsbrenner ist aus der CH-A-359 861 bekannt, wobei zur Vermeidung schädlicher, durch Luftzug oder Wind verursachter Druckdifferenzen an dem Strahlungsbrenner wenigstens einem Teil der Öffnungen, über welche der Brenner mit der Außenluft Verbindung hat, strömungsbehinderte Einrichtungen zugeordnet werden können. Bei dieser Konstruktion hat sich aber der Windschutz weder auf der Abstrahlungsseite der Brennerplatte, noch auf der Zuführungsseite der Verbrennungsluft als ausreichend wirksam erwiesen.

Aus der DE-A-1 551 770 ist ein weiteres gasbeheiztes Infrarot-Strahlungsheizgerät bekannt, wobei zwei Abgaskanäle einander gegenüberliegend vorgesehen sind und wobei zur Bildung der Kanäle das Gehäuse miteinbezogen ist.

Demgegenüber liegt der Erfindung die Aufgabe zugrunde, einen Strahlungsbrenner zu schaffen, der nicht nur auf der Abstrahlungsseite der Brennerplatte, sondern vor allem auch auf der Zuführungsseite der Verbrennungsluft und bei der Ableitung der Verbrennungsgase einen wirksamen Windschutz aufweist.

Die gestellte Aufgabe wird bei dem eingangs beschriebenen Strahlungsbrenner erfindungsgemäß dadurch gelöst, daß Abgasleitbleche vorgesehen sind, welche mit dem Tragteil der Glaskeramikplatte geschlossene Abgaskanäle bilden, daß die Abgasleitbleche die der offenen Gehäuseseite gegenüberliegende Gehäusedeckwand mit Abstand mit abgewinkelten Randteilen umgreifen, und daß an dem die Injektordüse umgebenden Anfangsteil des Mischrohres, welches an einer Stirnwand des Gehäuses befestigt ist, eine Windschutzkappe angeschlossen ist, welche als zylindrisches Rohr ausgebildet und mit Einschnitten versehen ist, wobei die Einschnitte einwärts umgekantete Leitbleche aufweisen.

Auf diese Weise wird eine weitgehende räumliche Trennung von Verbrennungslufteinlaß einerseits und Abgasaustritt andererseits bewirkt. Ferner ergibt sich der Vorteil, daß die Abgase mit vergleichsweise geringer Geschwindigkeit austreten können. Außerdem ergibt sich eine überraschende Spülwirkung in bezug auf die Abgase. Wenn nämlich ein Windstoß in einen Abgaskanal gelangen sollte, so bewirkt er eine Spülung der Abgase, die dann an dem anderen Abgaskanal um so schneller austreten können. Durch die symmetrisch ausgebildeten Abgaskanäle kann sich ein Abgasstau nicht ausbilden, weil der Abgasausfluß auf der gegenüberliegenden Seite, die nicht von dem Windstoß betroffen wird, nicht behindert sein kann.

Vorteilhafte Ausgestaltungen der Erfindung ergeben sich aus den abhängigen Ansprüchen.

In der Zeichnung ist ein Ausführungsbeispiel der Erfindung im Schema dargestellt, und zwar zeigt

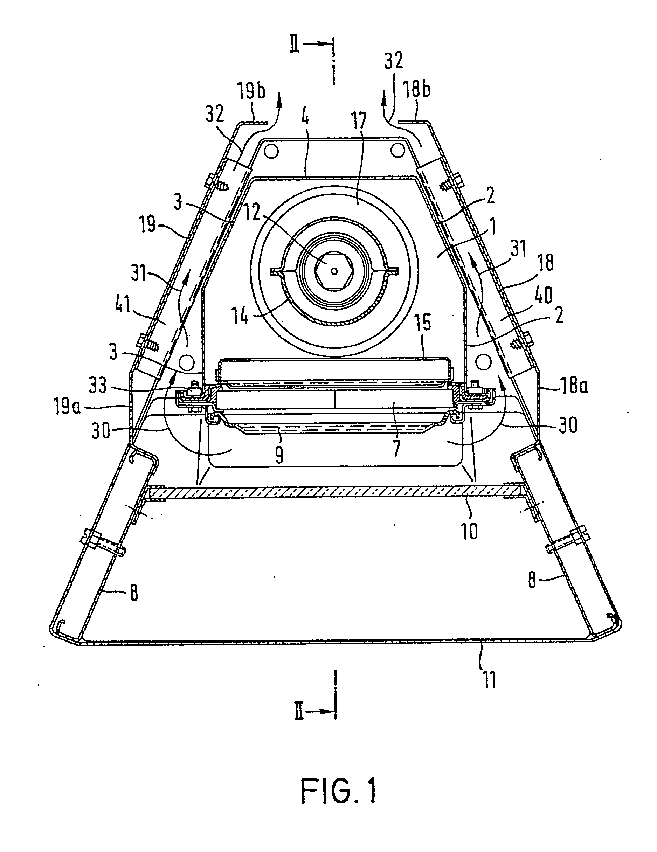

Figur 1 einen Vertikalschnitt durch einen Strahlungsbrenner gemäß Schnittlinie I-I in Fig. 2,

Figur 2 demgemäß einen Längsschnitt durch den Strahlungsbrenner entsprechend Schnittlinie II-II in Fig. 1,

Figur 2a eine Einzelheit aus Fig. 2 in perspektivischer Ansicht,

Figur 3 eine Einzelheit aus Fig. 1 in vergrößertem Maßstab,

Figur 4 eine Einzelheit aus Fig. 2 in vergrößertem Maßstab,

Figur 5 eine Draufsicht auf ein Windschutzgitter,

Figur 6 eine perspektivische Ansicht eines Teiles des Windschutzgitters gemäß Fig. 5 und

Figur 7 eine Draufsicht auf ein kleines Gitterteil.

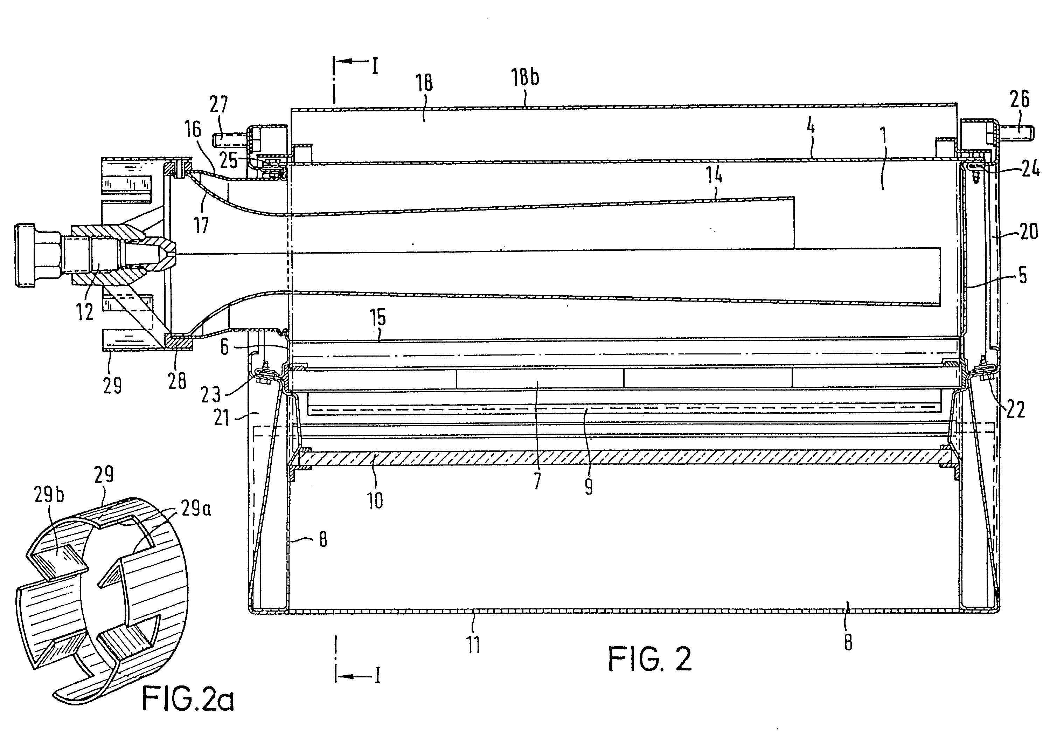

Der in der Zeichnung als Ausführungsbeispiel der Erfindung dargestellte Strahlungsbrenner ist als Infrarotstrahler ausgebildet, der mit einem gasförmigen Brennstoff-Luftgemisch betrieben wird. Zur Aufbereitung des Brennstoff-Luftgemisches dient ein einseitig offenes Gehäuse 1. In der dargestellten Betriebsstellung erfolgt die Abstrahlungsrichtung vertikal nach unten hin, es kann aber auch jede andere beliebige Betriebsstellung gewählt werden. Das Gehäuse besitzt zwei seitliche Längswände 2, 3, die etwa in der oberen Hälfte trapezförmig verjüngt sind und mit einer Gehäusedeckwand 4 verbunden sind. Entsprechend sind die Stirnwände 5 und 6 ausgebildet. An der unteren offenen Gehäuseseite ist eine Brennerplatte 7 angeordnet, welche aus hitzebeständigem Keramikmaterial besteht und zahlreiche, im vorliegenden Ausführungsbeispiel vertikal verlaufende, dicht nebeneinander befindliche Verbrennungskanäle aufweist. Vorteilhafterweise kann die Brennerplatte sowohl in Längs- als auch in Querrichtung aus mehreren dicht nebeneinander liegenden Einzelplatten zusammengesetzt sein. An der offenen Gehäuseseite ist ferner mit einem Abstand von der Brennerplatte 7 ein trichterartiges Gehäuseteil 8 vorgesetzt, welches beispielsweise an den Stirnwänden 5, 6 des Gehäuses angebracht ist. Ferner ist eine Vorrichtung zum Zuführen von Brennstoff und Luft vorgesehen, die im wesentlichen aus einer Injektordüse 12 besteht, welche an eine nicht gezeichnete Brennstoffleitung angeschlossen ist, sowie aus einem Mischrohr 14. Das Mischrohr 14 umgibt mit seinem Anfang die Injektordüse und ist hier mittels eines Ringes 28 und eines zwischengeschalteten Rohrstutzens 16 an der Stirnwand 6 des Gehäuses befestigt und ragt, wie Fig. 2 verdeutlicht, in das Gehäuse 1 hinein. Das Mischrohr besitzt ein etwa kegeliges Anfangsteil 17, welches nach einer Engstelle hin führt, während der in das Gehäuse hineinragende Teil sich wieder erweitert, so daß sich die Wirkung eines Venturierrohres ergibt.

Der vorerläuterte Brenner ist mit Windschutzvorrichtungen sowohl im Anschlußbereich der zum Zuführen von Brennstoff und Luft dienenden Vorrichtung als auch auf der Abstrahlungsseite der Brennerplatte 7 versehen. Die Windschutzvorrichtung auf der Abstrahlungsseite weist zunächst Abgasleitbleche 18 und 19 auf, welche die beiden einander gegenüberliegenden Längsseiten 2 und 3 des Gehäuses 1 unter Freilassen von Abgaskanälen 40, 41 umgeben. Über abgeknickte Blechteile 18a und 19a sind die Abgasleitbleche 18, 19 mit den nach der Brennerplatte 7 zu liegenden Ränder des trichterartigen Gehäuseteiles 8 luftdicht verbunden. Die Abgasleitbleche 18, 19 erstrecken sich nach oben hin bis zu den Längskanten der der offenen Gehäuseteilseite gegenüberliegenden Gehäusedeckwand 4. Die Abgasleitbleche 18, 19 sind mit ihrem oberen Randteil 18b, 19b nach innen umgekantet, so daß sie die Längskanten der Gehäusedeckwand 4 umgreifen. Vorteilhaft kann noch innerhalb des Gehäuses 1 oberhalb der Brennerplatte 7 eine Verteilerkammer 15 vorgesehen sein die so gestaltet ist, daß das aufbereitete Brennstoff-Luftgemisch in sie eintreten und sich hier gleichmäßig verteilen kann.

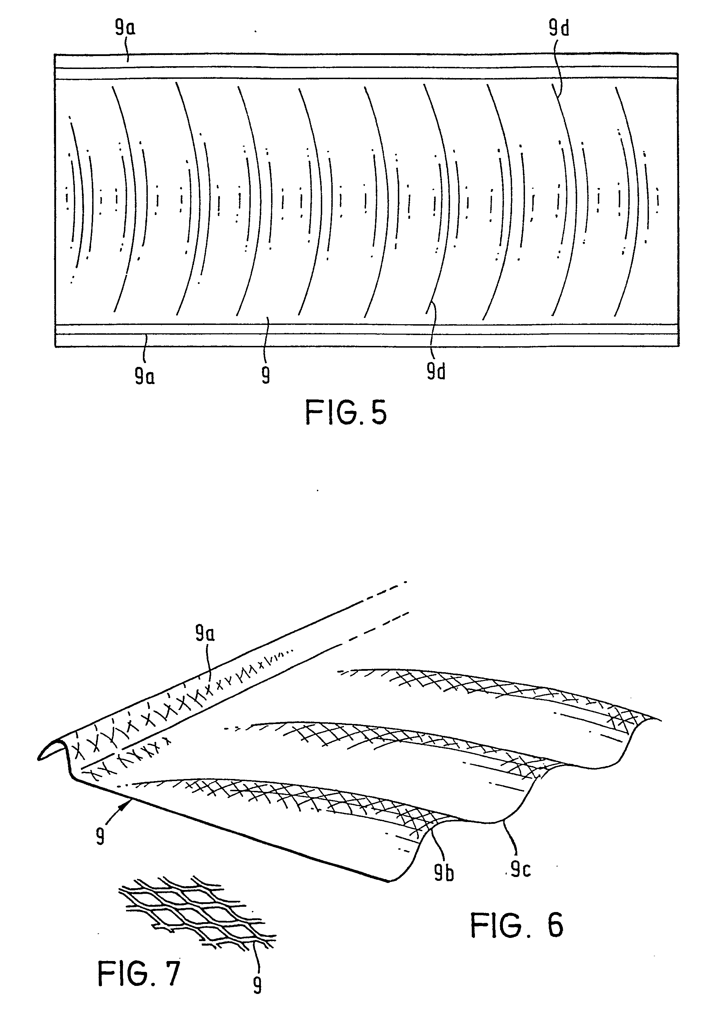

Für den Winschutz ist ferner auf der Abstrahlungsseite der Brennerplatte 7 ein diese vollständig überdeckendes Windschutzgitter 9 angeordnet. Das Windschutzgitter 9 besteht vorteilhafterweise aus Streckmaterial, wie Fig. 7 etwa im Maßstab 1 : 1 in einem kleinen Ausschnitt verdeutlicht. Vorteilhafterweise ist das Windschutzgitter 9 so geformt, daß eine Reihe nebeneinander liegender Wellen mit Wellenberger 9b und Wellentälern 9c gemäß Fig. 6 entstehen, die nach den Seitenrändern zu abflachend auslaufen. Darüber hinaus sind diese Wellen in Kreisbögen 9d gemäß Fig. 5 ausgebildet.

Die beiden längs und parallel zueinander verlaufenden Ränder 9a des Windschutzgitters 9 sind etwa halbzylindrisch umgebördelt. Durch diese vorteilhafte Ausgestaltung des Windschutzgitters ergibt sich außer der Windschutzwirkung in bezug auf die Strahlungsseite der Brennerplatte 7 noch eine weitere vorteilhafte Wirkung. Das Windschutzgitter wird nämlich von der Brennerplatte so stark aufgeheizt, daß es in einen rotglühenden Zustand kommt und seinerseits Strahlungswärme abgibt. Beim Aufheizen dehnt sich das Windschutzgitter aus und nach dem Abschalten des Brenners kühlt es sich wieder ab und zieht sich zusammen. Das Ein- und Ausschalten eines Brenners erfolgt im Verlaufe der Lebensdauer eines Brenners sehr häufig. Durch die vorerläuterte Formgebung des Windschutzgitters wird erreicht, daß immer die vorgegebene Form beibehalten wird und daß sich nicht irgendwelche Verwerfungen bzw. ungleichmäßige Auswölbungen ergeben, die im Laufe des Betriebes eine ungleichmäßige Erhitzung und Strahlungswirkung zur Folge haben würden. Es kommt hinzu, daß die Stege des Streckmetalles in den bogenförmigen Wellen so abgekantet sind, daß die Strahlung seitens der Brennerplatte über der Fläche gesehen leichter durchtreten kann und sich das Aussehen einer gleichmäßig strahlenden Fläche ergibt.

Mit Abstand von der Brennerplatte 7 und dem Windschutzgitter 8 ist in dem trichterartigen Gehäuseteil 8 eine am Rande gehaltene hitzebeständige Glaskeramikplatte 10 angeordnet. Diese Glaskeramikplatte verhindert jeglichen Windeinfluß von der Unterseite her in Richtung auf die Brennerplatte.

Sie erlaubt den Durchgang der Wärmestrahlung. Der vernachlässigbare geringfügige Wärmeverlust durch diese Glaskeramikplatte steht in keinem Verhältnis zu dem Wärmeverlust, der durch freien Zugang von Wind, zum Beispiel Windböen, auf die Brennerplatte entsteht.

Am Rande des Austrittsendes des trichterartigen Gehäuseteiles 8 ist schließlich noch ein weiteres Windschutzgitter 11 befestigt, welches weitgehend verhindert, daß sich durch Windeinwirkung Luftturbulenzen in dem von dem trichterartigen Gehäuseteil 8, der Glaskeramikplatte 10 und dem Windschutzgitter 11 eingeschlossenen Raum bilden. Gleichzeitig hat dieses Gitter die Aufgabe, die Glaskeramikplatte 10 vor Beschädigungen, zum Beispiel durch Steinwurf, zu schützen.

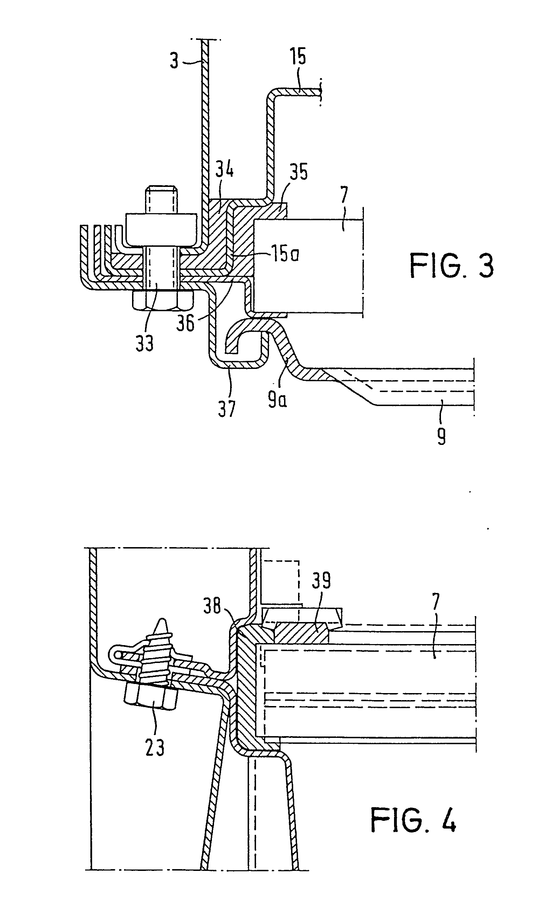

Vorteilhafterweise sind die Windschutzgitter 9 und 11 sowie die Glaskeramikplatte 10 leicht auswechselbar gehalten, um von Zeit zu Zeit den Brenner warten zu können, z. B. dir Brennerplatten zu überprüfen, die Glaskeramikplatte zu säubern u. dgl. Fig. 3 zeigt ein Ausführungsbeispiel der Konstruktion für die Halterung der Brennerplatte und des Windschutzgitters 9 an den beiden Längsseiten des Gehäuses, und zwar mittels einer Schraube 33, welche die Brennerplatte 7 und den umgebördelten Rand 9a des Windschutzgitters 9 unter Zwischenschaltung von abgewinkelten Blechen 36 und 37 sowie Dichtungsstücken 34 und 35 an der Längswand 3 des Gehäuses hält. Über ein abgewinkeltes Blechteil 15a kann gleichzeitig die Verteilerkammer 15 befestigt werden. Gemäß Fig. 4 erfolgt die Halterung der Brennerplatte 7 an den Stirnwänden des Gehäuses mittels einer Schraube 23 unter Zwischenschaltung von Dichtungsleisten 38 und 39. Weitere Halteschrauben 22 und 24, 25 (Fig. 2) gestatten ein einfaches Auseinandernehmen und Wiederzusammensetzen des Brenners. Stirnseitig kann das Gehäuse noch Verstärkungsrippen oder -Bleche 20 und 21 aufweisen. Die Zapfen 26 und 27 dienen zum Aufhängen oder anderweitigem Befestigen des Brenners.

Wie Fig. 2 im linken Bildteil und Fig. 2a in perspektivischer Ansicht verdeutlichen, ist auch im Anschlußbereich der zum Zuführen von Brennstoff und Luft dienenden Vorrichtung eine Windschutzvorrichtung vorgesehen, und zwar ist an dem die Injektordüse 12 umgebenden Anfangsteil 17 des Mischrohres 14 unter Zwischenschaltung des Ringes 28 eine Windschutzkappe 29 angeschlossen. Die Windschutzkappe 29 ist aus einem einfachen zylindrischen Rohr hergestellt, welches in der dargestellten Weise mit Einschnitten 29a und einwärts umgekanteten Leitblechen 29b versehen ist.

Die Wirkungsweise der oben erläuterten Windschutzvorrichtungen an dem beschriebenen Brenner ist im wesentlichen folgende. Nach Inbetriebnahme des Brenners können die Abgase ungehindert in Richtung der Pfeile 30, 31 und 32 durch die beschriebenen Abgaskanäle 40 und 41 nach oben hin austreten. Bei Stellung des Brenners mit Strahlungsrichtung nach unten oder bei einer gewissen Neigung wird das Abströmen der Abgase noch durch eine Kaminwirkung begünstigt. Durch diese Abgasführung mit Hilfe der Abgasleitbleche 18, 19 ergibt sich ein weiterer Vorteil, der darin besteht, daß die Gehäuselängswände 2 und 3 durch die vorbeistreichenden heißen Abgase erwärmt werden. Die Wärme wird nach innen auf das aufzubereitende Brennstoff-Luftgemisch übertragen, so daß dieses vorgewärmt wird. Durch die Abgasleitbleche 18, 19 und weiterhin begünstigt durch die abgekanteten Randteile 18b, 19b wird weitgehend verhindert, daß sich Windeinflüsse störend auf der Abstrahlungsseite der Brennerplatte 7 bemerkbar machen. Selbst wenn noch etwas Wind auf der einen oder anderen Seite in die Abgaskanäle 40 oder 41 eintreten sollte, so sorgt das Windschutzgitter 9 für ein endgültiges Unschädlichmachen. Das beschriebene äußere Windschutzgitter 11 sorgt wie erläutert für eine Beruhigung der Luft innerhalb des trichterartigen Gehäuseteiles 8 und die Glaskeramikplatte 10 verhindert von der Unterseite her endgültig den Einfluß von Wind auf der Abstrahlungsseite der Brennerplatte 7. Schließlich ist auch im Anschlußbereich der zum Zuführen von Brennstoff und Luft dienenden Vorrichtung 12 und 14 ein schädlicher Einfluß von Wind vermieden, denn durch die vorgesetzte Windschutzkappe 29 mit den Einschnitten 29a und den Leitblechen 29b wird ein störender Windeinfluß von allen Seiten vermieden.

**Ansprüche**

1. Strahlungsbrenner, insbesondere für gasförmigen Brennstoff, mit einem einseitig offenen Gehäuse (1) zur Aufbereitung eines Brennstoff-Luft-Gemisches sowie mit einer an der offenen Gehäuseseite angeordneten, zahlreiche Verbrennungskanäle aufweisenden Brennerplatte (7), ferner mit einer Vorrichtung zum Zuführen von Brennstoff und Luft und mit einem im Abstand von der Brennerplatte (7) an der offenen Gehäuseseite vorgesetzten, trichterartigen Gehäuseteil (8), wobei die Vorrichtung zum Zuführen von Brennstoff und Luft eine an eine Brennstoffleitung angeschlossene Injektordüse (12) sowie ein Mischrohr (14) aufweist, das mit dem einen Ende der Injektordüse (12) benachbart ist und in das Gehäuse (1) hineinragt, wobei ferner mit Abstand von der Brennerplatte (7) in dem trichterförmigen Gehäuseteil (8) eine am Rande gehaltene hitzebeständige Glaskeramikplatte (10) angeordnet ist und auf der Abstrahlungsseite der Brennerplatte (7) ein diese vollständig überdeckendes Windschutzgitter (9) angeordnet ist, und wobei schließlich am Rande des Austrittsendes des trichterförmigen Gehäuseteils (8) ein weiteres Windschutzgitter (11) befestigt ist, dadurch gekennzeichnet, daß Abgasleitbleche (18, 19) vorgesehen sind, welche mit dem Tragteil der Glaskeramikplatte (10) geschlossene Abgaskanäle (40, 41) bilden, daß die Abgasleitbleche (18, 19) die der offenen Gehäuseseite gegenüberliegende Gehäusedeckwand (4) mit Abstand mit abgewinkelten Randteilen (18b, 19b) umgreifen, und daß an dem die Injektordüse (12) umgebenden Anfangsteil (17) des Mischrohres (14), welches an einer Stirnwand des Gehäuses (1) befestigt ist, eine Windschutzkappe (29) angeschlossen ist, welche als zylindrisches Rohr ausgebildet und mit Einschnitten (29a) versehen ist, wobei die Einschnitte (29a) einwärts umgekantete Leitbleche (29b) aufweisen.

2. Strahlungsbrenner nach Anspruch 1, wobei das auf der Abstrahlungsseite der Brennerplatte (7) angeordnete Windschutzgitter (9) aus Streckmetall besteht, dadurch gekennzeichnet, daß das Windschutzgitter (9) in Querrichtung in Kreisbögen (9d) verlaufenden Wellen (9b, 9c) ausgeformt ist.

3. Strahlungsbrenner nach Anspruch 1 oder 2, dadurch gekennzeichnet, daß die Windschutzgitter (9, 11) und die Glaskeramikplatte (10) auswechselbar angeordnet sind.

**Claims**

1. A radiation burner intended, more especially, for a gaseous fuel and provided with a unilaterally open housing (1) for the preparation of a fuel/air mixture as well as with a burner plate (7), which is arranged on the open housing side and has numerous combustion channels, and furthermore with a device for feeding fuel and air and with a funnel-like housing part (8), which is placed in front of the open housing side at a distance from the burner plate (7), the device for feeding fuel and air comprising an injector nozzle (12), which is connected to a fuel line, as well as a mixing tube (14), which is adjacent to one end of the injector nozzle (12) and projects into the housing (1), there being furthermore arranged in the funnel-shaped housing part (8) at a distance from the burner plate (7) a heat-resistant glass ceramic plate (10), which is held on the edge, and there being arranged on the emission side of the burner plate (7) a wind screen (9), which completely covers the latter, and there being finally fastened another wind screen (11) on the edge of the outlet end of the funnel-shaped housing part (8), characterised in that there are provided waste-gas baffle plates (18, 19) which form closed waste-gas channels (40, 41) with the supporting part of the glass ceramic plate (10), and in that the waste-gas baffle plates (18, 19) embrace, with angled edge parts (18b, 19b), the housing cover wall (4) that is opposite to the open housing side at a distance, and in that there is connected to the starting part (17) of the mixing tube (14) which surrounds the injector nozzle (12) and which is fastened to a front wall of the housing (1) a wind (protection) cap (29), which is designed as a cylindrical tube and is provided with indentations (29a), which have inwardly folded baffle plates (29b).

2. A radiation burner as claimed in Claim 1, wherein the wind screen (9) arranged on the emission side of the burner plate (7) consists of expanded metal, characterised in that the wind screen (9) is formed in waves (9b, 9c) which extend in circular arcs (9d) in the transverse direction.

3. A radiation burner as claimed in Claim 1 or 2, characterised in that the wind screens (9, 11) and the glass ceramic plate (10) are provided so as to be exchangeable.

**Revendications**

1. Brûleur à radiation, en particulier pour combustible gazeux, comportant un carter (1) ouvert d'un côté pour la préparation d'un mélange combustible-air, et une plaque brûleur (7) disposée du côté ouvert du carter et présentant de nombreux canaux de combustion, ainsi qu'un dispositif pour introduire le combustible et l'air, et un élément de carter en entonnoir (8) disposé devant le côté ouvert du carter, à distance de la plaque brûleur (7), ce dispositif présentant une buse d'injection (12) reliée à une conduite de combustible ainsi qu'un tuyau de mélange (14) qui est voisin d'une des extrémités de la buse d'injection (12) et qui s'étend à l'intérieur du carter (1), une plaque (10) en vitrocéramique résistant à la chaleur et maintenue sur son bord étant disposée dans l'élément de carter en entonnoir (8) à distance de la plaque brûleur (7) et une grille pare-brise (9) disposée sur le côté radiant de la plaque brûleur (7) en recouvrant complètement celui-ci, une autre grille parebrise (11) étant fixée au bord de l'extrémité de sortie de l'élément de carter en entonnoir (8), caractérisé en ce qu'il est prévu des déflecteurs de gaz résiduaires (18, 19) qui constituent avec la partie portante de la plaque (10) en vitrocéramique des canaux de gaz résiduaires (40, 41) fermés, en ce que les déflecteurs de gaz résiduaires (18, 19) entourent à distance le couvercle (4) du carter situé en face du côté ouvert du carter par leurs bordures (18b, 19b) coudées, et en ce qu'une couronne pare-brise (29) est reliée à l'entrée (17) du tuyau de mélange (14) entourant la buse d'injection (12), lequel est fixé à la paroi frontale du carter (1), ladite couronne pare-brise étant constituée par un tuyau cylindrique et étant pourvue d'encoches (29a), les encoches (29a) présentant des déflecteurs (29b) pliés à arête vive vers l'intérieur.

2. Brûleur à radiation selon la revendication 1, dans lequel la grille pare-brise (9) disposée sur le côté radiant de la plaque brûleur (7) est en métal déployé, caractérisé en ce que la grille pare-brise (9) présente des ondulations (9b, 9c) qui s'étendent transversalement en arcs de cercle (9d).

3. Brûleur à radiation selon la revendication 1 ou la revendication 2, caractérisé en ce que les grilles pare-brise (9, 11) et la plaque en vitrocéramique (10) sont remplaçables.

FIG. 1

FIG. 2

FIG.2a

FIG. 3

FIG. 4

9a 9d

FIG. 5

9a 9 9d

9a

9

9b 9c

FIG. 6

FIG. 7

9